# EUROPEAN PATENT SPECIFICATION

(11) **EP 1 936 868 B1**
(45) Date of publication and mention of the grant of the patent: **01.05.2013**
(21) Application number: 06804952.7
(22) Date of filing: 17.10.2006
(51) Int. Cl.: H04L 12/26

(54) **A method for monitoring quality of service in multimedia communication**
Verfahren zur Beobachtung der Dienstgüte von Multimedia Kommunikation
Méthode pour surveiller une qualité de service dans une communication multimédia

(30) Priority: 17.10.2005 CN 200510113941
(43) Date of publication of application: 25.06.2008
(73) Proprietor: Huawei Technologies Co., Ltd., Longgang District, Shenzhen Guangdong 518129 (CN)
(72) Inventor: SONG, Bin, Guangdong 518129 (CN); LUO, Zhong, Guangdong 518129 (CN)
(74) Representative: Körber, Martin Hans
(86) International application number: PCT/CN2006/002733
(87) International publication number: WO 2007/045166

(56) References cited:
- EP-A2- 1 304 831
- WO-A-2005/022865
- CN-A- 1 440 176
- CN-A- 1 625 174
- US-A1- 2003 223 381
- US-A1- 2005 094 557
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt" IETF STANDARD, INTERNET ENGINEERING TASK FORCE, IETF, CH, 1 July 2003 (2003-07-01), XP015009332 ISSN: 0000-0003
- ARGYRIOU A ET AL: "Streaming H.264/AVC video over the internet" CONSUMER COMMUNICATIONS AND NETWORKING CONFERENCE, 2004. CCNC 2004. FI RST IEEE LAS VEGAS, NV, USA 5-8 JAN. 2004, PISCATAWAY, NJ, USA,IEEE, 5 January 2004 (2004-01-05), pages 169-174, XP010696819 ISBN: 978-0-7803-8145-2

## Description

### Field of the Invention

The present invention relates to the field of multimedia communications and management technologies, and in particular to monitoring the Quality of Service of multimedia communications.

### Background of the Invention

As the Internet and mobile communication networks develop rapidly, streaming media technologies have been applied more and more widely, and they have been used in network broadcasting, video contents playing, distance learning, online news web sits, etc. There are currently two dominating approaches to the network transmission of video and audio, i.e., downloading and streaming. Streaming refers to continuous transport of video/audio signals in a way that the part of streaming media that is already received by the end user terminal is played while the remaining parts keep being downloaded. Streaming can be divided into two approaches, namely progressive streaming and real time streaming. Real time streaming refers to real time transport and is especially suitable for a spot event. Streaming requires a match of a connection bandwidth with the contents being streamed, which means that the quality of images may degrade as the bandwidth the network can provide is lowered to reduce a demand for a transmission bandwidth. The concept of "real time" refers to that a precise temporal relationship shall be maintained for the delivery of data relative to generation of the data in an application.

Especially along with emergence of the Third Generation (3G) mobile communications system and the rapid development of prevailing Internet Protocol (IP) based networks, video communications gradually becomes one of leading services of communications. Two-party or multi-party video communication services such as videotelephone, video-conferencing, and multimedia services based on mobile terminals, are all making very strict demands on transmission and the quality of service of multimedia data streaming. Both better real time network transmission and accordingly higher compression and encoding efficiency of video data are required.

In view of the current demand for media communications, the International Telecommunications Union Telecommunication Standardization Sector (ITU-T) published formally the standard of H.264 in the year of 2003 subsequently to the establishment of such video compression standards as H.261, H.263, H.263+. This is an efficient compression standard catering to the transmission and communications demand of network media in the new phrase, which was established jointly by the ITU-T and the Moving Picture Experts Group (MPEG) of the International Standardization Organization (ISO). It is also primary content of Section 10 in the MPEG-4 standard.

The H.264 standard was established for the purpose of improving more efficiently the video coding efficiency and its adaptation to network conditions. Due to its superiority, the H.264 video compression standard gradually becomes a currently predominant standard in multimedia communications very soon. Numerous real time multimedia communication products (e.g. video-conferencing system, video phone, 3G mobile phone communications) and network streaming media products of H.264 have emerged successively in the market, and whether H.264 can be supported has become a crucial factor in determining competitiveness of a product in the market. Predictably, multimedia communications based upon IP networks and 3G and post-3G wireless networks will inevitably enter a new phrase of rapid development along with formal publishing and widespread applications of H.264.

As mentioned above, multimedia communications require both high media compression efficiency for real time network transmission. Currently, the Real-time Transport Protocol (RTP) and the Real-time Transport Control Protocol (RTCP) are generally adopted for multimedia streaming. The RTP is a transport protocol for multimedia data streaming over the Internet, which was published by the Internet Engineering Task Force (IETF). The RTP is defined to operate in the case of one-to-one or one-to-many transmission for the purpose of providing temporal information and enabling streaming synchronization. The RTP is typically applied over the User Datagram Protocol (UDP) but can also operate over other protocols such as the Transport Control Protocol (TCP), the Asynchronous Transfer Mode (ATM).

The RTP guarantees only real time transmission of data and can provide neither a mechanism for reliable transport nor one for traffic control or congestion control, and these services have to be provided by means of the RTCP. The RTCP is responsible for management of a transmission quality and exchange of control information between ongoing application processes. During an RTP session, respective participants transport periodically RTCP packets including statistic data concerning the number of transmitted data packets and the number of lost data packets, etc. Therefore, a server can change dynamically a transmission rate and even a valid payload type using the information. The joint use of the RTP and the RTCP can optimize the transmission rate with an effective feedback and a minimum overhead and therefore is suitable for transporting real time data over network.

Transport of H.264 multimedia data over an IP network is also based upon the UDP protocol and the upper RTP protocol. The RTP per se is structurally applicable to different types of media data, but for different high level protocols or media compression standards (e.g. H.261, H.263, MPEG-1/-2/-4, MP3) in multimedia communications, the IETF usually establishes a specification of an RTP payload packaging method for the protocol in which an RTP encapsulation method optimized for the specific protocol is specified. Alike, there is also a corresponding IETF standard for H.264, i.e., RFC 3984: RTP Payload Format for H.264 Video. This standard is currently a primary standard for the transport of a H.264 encoded video stream over the IP network and is applied widely. In the field of video communications, products of major manufacturers are based upon RFC3984, and the RFC3984 is currently also the only H.264/RTP transmission approach.

In fact, H.264 is distinguished from previous other video compression protocols primarily in that H.264 defines a new layer referred to as a Network Abstract Layer (NAL), and this layer is such an abstract service capability layer that can open underlying service capabilities with a standard interface and shield the diversity of underlying networks. H.264 defines the new layer of NAL in order to improve the separation and independence of its Video Coding Layer (VCL) from the lower specific network transport protocol layers and hence to bring more flexibility of application, and this layer is absent in earlier video compression protocols of the ITU-T such as H.261, H.263/H.263+/H.263++, etc. However, it is still worth studying on how to design a more efficient and better solution in view of the advantages of H.264 in cooperative operation of the NAL and protocol bearing of the RTP to achieve better performance of the RTP bearing H.264, which will be practicable.

Here, a brief description will be given of a data unit format of H.264 multimedia data for processing at the NAL layer. The NAL layer is located between the VCL and the RTP, and it is prescribed that a video bitstream shall be divided into a series of Network Abstract Layer Units of data (NALU) in accordance with defined rules and structures. An encapsulation format of an NALU in RTP payload is defined in the RFC 3984.

In an encapsulation structure of the NALU in the RTP payload, the first byte is head information of the NALU, and subsequent ones are data contents of the NALU; a plurality of NALUs are filled end-to-end in payload of an RTP packet; and finally there is also an optional RTP padding, which is a content prescribed in a format of the RTP packet so as to make a length of the RTP packet in compliance with a certain requirement (e.g. up to a fixed length), and the optional RTP padding data is typically filled as zero.

The head information of the NALU, i.e., the first byte, is also referred to as an octet including total three fields, and their meanings and full names will be described below respectively.

The F field is defined as a forbidden bit (forbidden_zero _bit) of 1 bit, which indicates a syntax error, etc.. This field is set to 1 at presence of a syntax error. When the presence of a bit error in the unit is identified in the network, this field can be set to 1 so that a receiver will discard the unit. It is primarily applicable in different network scenarios (e.g. a scenario with wired and wireless combination).

An NRI field is defined as an NAL reference identifier (nal_ref_idc) of 2 bits, which indicates an importance level of NALU data. The value of 00 of this field indicates that the contents of the NALU are not for reconstruction of an inter-frame prediction reference frame, and all values other than 00 indicate that the present NALU is important data belonging to a slice of a reference frame, a Sequence Parameter Set (SPS), a Picture Parameter Set (PPS), etc.. The larger the value is, the more important the present NAL is.

The Type field is defined as an NALU type (Nal_unit_type) of 5 bits, and there are 32 NALU types. Correspondence relationships between the values and the specific types are given in details in Table 1.

**Table 1 Correspondence relationships between the values and the specific types of Type filed in head information of the NALU**

| Type value | Type of NALU contents |
|---|---|
| 0 | Undesignated |
| 1 | encoded slice of non-IDR image |
| 2 | Division A of encoded slice data |
| 3 | Division B of encoded slice data |
| 4 | Division C of encoded slice data |
| 5 | Enoded slice in IDR image |
| 6 | SEI (Supplement Enhancement Information) |
| 7 | SPS (Sequence Parameter Set) |
| 8 | PPS (Picture Parameter Set) |
| 9 | Access unit delimiter |
| 10 | End of sequence |
| 11 | End of bitstream |
| 12 | Padding data |
| 13-23 | Reserved |
| 24-31 | Undesignated |

As can be seen, the information presented in one byte of the head information of the NALU primarily includes the validity and importance level of the NALU. Importance of the RTP borne data can be determined in accordance with the information. An H.264 video bit stream is divided into an NALU stream at the NAL layer in accordance with a certain rule, for example, a frame of image can be taken as an NALU, and a slice can also be taken as an NALU. As can be seen from Table 1, in addition to the encoded data directly related to the image, special information such as the Supplement Enhancement Information (SEI), for the control of extended functions and the like can also be encapsulated in the NALU. The information of the extended functions plays an important role in the implementation of the invention, and specific technical solutions will be detailed later.

H.264 is a primary video protocol of future multimedia communication. Networks to which future multimedia communications may be applied will be primarily data packet switch networks and wireless networks, and a representative of the networks is the IP. Neither of the two major types of networks can provide a good guarantee of Quality of Service (QoS), and transport of video over the network will be inevitably influenced by various transport errors such as the packet loss, and will thus degrade the communication quality. One of major problems here lies in that best-effort transmission implemented over the IP network can not guarantee the QoS of video signal transmission. The problem will be even obvious especially for an efficiently compressed H.264 bitstream. Best-effort transmission over the IP network can not guarantee the QoS of real time video communications, and the QoS concerns, for example, the data packet loss, the delay and the delay jittering. Particularly, the data packet loss has the greatest influence upon the quality of video. Since an H.264 compression algorithm makes use of technologies of motion estimation and motion compensation, possible presence of the data packet loss may influence upon both a currently decoded image and a subsequently decoded image, i.e., encoding error diffusion. Encoding error diffusion has a great influence upon the quality of video and can be avoided completely only if both the encoding end and the decoding end cooperate to resist encoding errors.

Error resilience refers to that a transport mechanism has an ability to prevent an error from occurring or to correct in some way an error that occurs. The error can be corrected completely if it is within a range of degree and partially if it is beyond that range. In future widespread multimedia communication scenarios, whether a video transport mechanism is provided with error resilience will be of great importance.

There are various possible error resilience mechanisms, e.g. Forward Error Correction (FEC), Automatic Retransmission Request (ARQ), Error Concealment, Joint Source-Channel Coding (JSCC), interleaving, elimination of code error diffusion. The FEC is a practical and effective technology for transport of H.264 video over a data packet network. This method primarily uses various error corrective coding to code data for protection, and it is substantially to form data redundancy to thereby improve the ability of resist an error. Of course, other error resilience mechanisms also have their own advantages.

However, no matter which transport quality protection mechanism is in use, QoS related information, e.g. values of the packet loss ratio, the delay and the jittering, has to be obtained firstly. It is only in this way that a proper protection method can be selected. When a transport quality is influenced seriously, a method capable of strong protection has to be used.

As described above, in the current H.264/RTP multimedia communication architecture, the cooperative control protocol of RTCP is primarily used for QoS monitoring and for congestion control and traffic control based on the QoS monitoring. The RTCP is primarily intended for a control and a report of the RTP protocol. Primary contents of the report are QoS related information. A report method adopted for the RTCP is a periodical report, that is, to transmit periodically control data packets to all participants in a two-party or multi-party session, and the same distribution mechanism as that for an RTP data packet is adopted for the report. Data is provided and data packets are multiplexed (e.g. separate UDP port numbers, are used respectively) in an underlying protocol. It is recommended in the RFC 3550 file that a session bandwidth added for the RTCP shall be 5% of a media bandwidth.

Types and structures of an RTCP data packet will be introduced below. The following types of RTCP data packets are defined in the RTCP to carry various control information: a Sender Report (SR), which is statistic information on transmissions and receptions of an initiating sender; a Receiver Report (RR), which is statistic information received from a participant other than the initiating sender; a Source Description (SDES) item including CNAME; a participant termination (quit) identifier (BYE); and an Application-specific Function (APP).

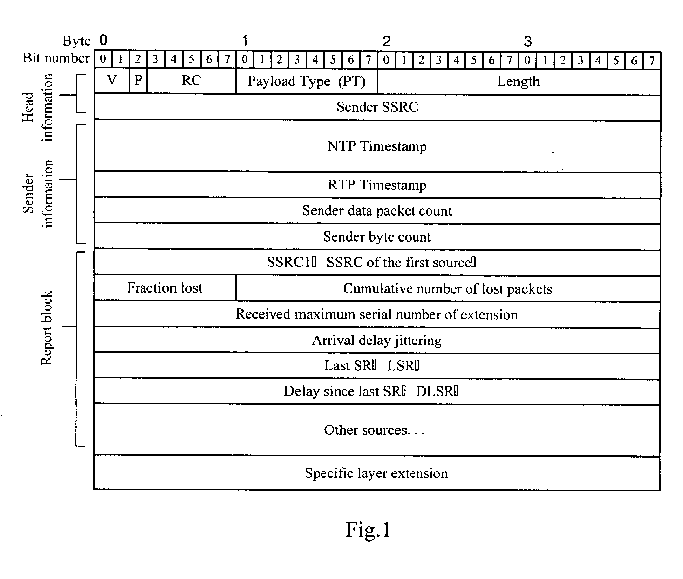

A packet structure of a report sent and received by the RTCP is as illustrated in Fig.1 and can be divided based on its content into three segments, firstly head information, then sender information, subsequently a report content block and finally an extension of a specific profile (the so-called profile refers to a specific rule instance established for the demand of a specific application scenario). Fig. 1 illustrates meanings and detailed full name descriptions of the respective fields as follows.

The V field is version information (V) of 2 bits, and the present RTP/RTCP version number is V=2.

The P field is a padding flag of 1 bit. If P is set, it indicates that the tail of the RTCP data packet includes some additional padding bytes which do not belong to control information, but these bytes are counted in the length field.

The RC field is a Reception Report Count (RC) of 5 bits, and the number of reception report blocks included in the data packet is allowed to be zero.

The PT field is a Payload Type (PT) of 8 bits and indicates that this is an SR data packet when it takes on a value of 200.

The length field of 16 bits is equal to the length of the RTCP data packet minus 1, including the head and any padding. The length of the RTCP data packet is calculated in a unit of 32-bit words.

The sender SSRC of 32 bits indicates a Synchronous Source Identifier (SSRC) of an initiator of the SR data packet. A synchronous source here identifies uniquely a media data source, e.g. a source of video.

The NTP timestamp field is a Network Time Protocol (NTP) timestamp of 64 bits and indicates a wall clock (absolute time and date) after the report is sent. This field is used in combination with an RTP timestamp;

The RTP timestamp field is an RTP timestamp of 32 bits, i.e., an RTP protocol generated timestamp.

The sender data packet count field of 32 bits indicates the total number of RTP data packets transmitted by the sender during a period from setting up of transmission to generation of the SR data packet.

The sender byte count field of 32 bits indicates the total number of bytes of payload (neither head nor padding is included) transmitted by the sender in the RTP data packets during the period from setting up of transmission to generation of the SR data packet. This field can be used to calculate an average rate of the payload.

The following fields include zero or a plurality of reception report blocks, and the specific number of the reception report blocks is dependent upon the number of other sources as known to the sender from the last report. Each of the reception report blocks conveys statistic information of RTP data packets received from a single synchronous source, and the statistic information includes the following.

The fraction lost of 8 bits indicates the number of lost fractions of media from the source since transmission of the last report; and the cumulative number of lost packets of 24 bits indicates the cumulative number of lost packets since the beginning of reception.

The received maximum serial number of extension and the arrival delay jittering reflect a condition of network transmission.

The Last SR (LSR) of 32 bits refers to a timestamp mark of the last SR report of the source and takes on a value of middle 32 bits of the NTP of the last SR.

The Delay since Last SR (DLSR) of 32 bits refers to an interval length of a time period from the last SR to the SR. This parameter is used to calculate key parameters of a QoS report.

The data packet format of the receiver report (RR) is different from that of the sender report (SR) in that the value of the payload type field is 201 and no sender information part is present.

The RTCP accomplishes the following four functions in accordance with standards of the RTP/RTCP protocol.

A basic function is to provide a feedback report mechanism for a transport quality of real time multimedia data, which is a constituent part of the RTP acting as the transport layer protocol. This feedback function can be implemented by transporting a sender report (SR) and a receiver report (RR) though the RTCP.

The RTCP transports a permanent transport layer identifier for each RTP source, which is referred to as a Canonical Name (CNAME). Since the SSRC identifier may be changed upon the discovery of a collision or restart of a program, the receiver shall trace each participant by the CNAME.

The previous two functions require all the participants to send an RTCP data packet, and therefore a rate of the RTCP data packets shall be controlled so that the number of the participants can be increased in proportion though the RTP.

The fourth function is an optional function of transporting as little control information as possible.

Obviously, in the solutions of the prior art, a QoS report is transported through the RTCP protocol, the QoS information is reported in accordance with report contents as prescribed in the RTCP protocol, and accordingly QoS monitoring of such a bearing media as H.264 can be implemented.

It shall be noted, however, though a mechanism for providing a QoS report is brought by the RTCP, an extra network bandwidth overhead of up to 5% may arise due to the use of a periodical report method. If congestion occurs in the network and thus degrades the QoS, then an extra traffic resulting from the RTCP may exacerbate the problem. This problem was realized at the development of the RTCP protocol, and hence an optional function was provided of requiring transport of as little control information as possible. However, a precision degree of a report may be influenced if too little information is transported. This is a paradox.

In a practical application, the above solution has the following problems. The use of a QoS report mechanism of the auxiliary control protocol of RTCP to implement QoS monitoring of H.264 multimedia communications has not taken the full advantages of H.264 multimedia in view of that the RTCP is a universal QoS report mechanism but may not be applicable to specific media types such as H.264 with their own particularities and specific functions, because it has not made full use of the advantages of H.264 per se.

Secondly, the RCP is an additional channel relative to the RTP, and an extra logic channel has to be opened in order to implement the RTCP in the specific protocol architecture such as H.323. The use of a so-called "out-band" monitoring method may result in an extra overhead of a network transmission bandwidth, and thus may be in breach of the purpose in the QoS mechanism partially for addressing the problem of network congestion and lack of bandwidth. This problem may be deteriorated in the case of some poor network conditions.

The periodical report mechanism of the RTCP also results in a bandwidth overhead, and the overhead may be increased sharply as the number of communication parties is increased. Also the problem may be deteriorated due to RTCP traffic upon occurrence of network congestion.

Further, an RTCP data packet is typically not protected with any protection mechanism. The RTCP based upon the UDP protocol is a connection-less transport protocol and consequently can not guarantee proper arrival of a report data packet, which may result in low reliability of the QoS mechanism per se.

A primary reason for this situation lies in that the H.264/RTP multimedia communication architecture transmits a QoS report through a universal cooperative control protocol RTCP to implement QoS monitoring. Unfortunately, network condition may be affected due to transmission of the QoS report through the RTCP out-band reopened logic channel.

The PCT application No. PCT/IB2004/002826 (WO 2005/022865 A, referred to as D1 thereafter) disclosed methods of transmitting QoS information between devices. One aspect of the methods relates to attaching at least part of the QoS information to protocol messages which are transmitted anyhow between the devices. There maybe a plurality of protocols as potential candidates for such utilizations. D1 did not illuminate how to find among all the candidate protocols certain protocols which may present more desirable and efficient performance in such utilizations.

### Summary of the Invention

The invention is defined by the subject-matter of the in dependent claims.

In view of above, a main object of the invention is to provide a method for monitoring the quality of service of H.264 multimedia communications, thereby achieving in-band implementation of QoS monitoring of H.264 multimedia communications while reducing an extra overhead due to QoS monitoring.

The invention provides a method for monitoring the quality of service of multimedia communications including: obtaining data related to the quality of service of the communications and statistically generating from the data the report on quality of service of the multimedia communications by a communication terminal n; bearing the report on quality of service in an extension message of a data frame in a multimedia codec standard used for the multimedia communications and sending the message to other communication terminals sending QoS reports to the communication terminal by the communication terminal; and extracting the report on quality of service from the received extension message of the data frame in the standard and carrying out the quality of service policy in accordance with the report on quality of service by each of the communication terminals.

Preferably, the multimedia codec standard is H.264.

More preferably, the extension message includes supplement enhancement information data; and the supplement enhancement information data is borne in a network abstract layer data unit of the data frame in the standard, and the supplement enhancement information data includes information of the report on quality of service.

The report on quality of service includes: a payload type field which indicates that payload is a corresponding report on quality of service; a payload length field which indicates a length of the corresponding report on quality of service; and the payload in which the corresponding report on quality of service is filled.

More preferably, the report on quality of service is categorized into a sender report and a receiver report which are distinguished by the payload type field.

When the report on quality of service is a report in the real-time transport control protocol and the report on quality of service is filled in the payload of the supplement enhance information, contents of the report on quality of service include: a version information field which identifies a current version of the report on quality of service; a padding field which indicates whether padding contents are present; a reception report count field which indicates the number of reception report blocks reported in the report on quality of service; a sender synchronous source identifier field which identifies a sender of the report on quality of service; at least one reception report block which describes statistic information on multimedia from different sources; and a specific layer extension for a specific layer reserved function extension.

More preferably, when the report on quality of service is the sender report, the contents of the report on quality of service comprise a sender information block which describes related information on a sender of the report on quality of service; the supplement enhancement information bearing the quality of the service report is further borne by the network abstract layer unit; and the communication terminal sets a network abstract layer reference identifier of the network abstract layer unit in accordance with a reliability requirement on transmission of the report on quality of service and takes corresponding protection measures in accordance with the identifier.

The communication terminal adjusts dynamically statistic generation of the report on quality of service and a time period to transmit the report on quality of service in accordance with a current network condition and a high level application demand.

More preferably, the generation of the report on quality of service is stopped for a predetermined period of time in a good network condition.

More preferably, when the communication terminal bears the report on quality of service of at least media stream in the supplement enhance message, the report on quality of service includes a reception report block corresponding to the borne at least one media stream.

The communication terminal uses selectively the extension message of H.264 or the real-time transport control protocol to bear the report on quality of service.

As compared with the prior art, the invention makes direct use of the extension message mechanism of the high level media protocol H.264 per se to bear QoS report information without use of any extra channel, thereby implementing an "in-band" QoS report mechanism. The H.264 message extended mechanism, e.g. an SEI message, is sued to self define user data (for example, information in the RTCP is added into extended information of the protocol) for transmission of a QoS report so as to monitor a transmission quality of H.264 multimedia communications, without affecting communications of any existing device in the H.264 protocol while reducing an extra bandwidth overhead.

The H.264 "in-band" report mechanism can be used as an optional mechanism of multimedia communications. This means no exclusion of an RTCP report mechanism and also means compatibility with the existing RTCP control protocol. The RTCP report traffic can also be reduced even if both of the mechanisms coexist.

Various protection measures are also provided based upon the use of an H.264 in-band report to improve the current unreliability of the RTCP/UDP. An importance level of H.264 data for transmission of a QoS report can be improved by setting the data as important data, so that the existing H.264 protection mechanism can be utilized sufficiently to enhance the protection of the QoS report and to improve the reliability of QoS monitoring.

Further, the QoS monitoring function can also be provided for other media data through the H.264 in-band QoS mechanism, thereby implementing the QoS monitoring of various media and various data.

With the H.264 message extension mechanism, the invention provides a solution for transport of a QoS report over a media network, so as to implement in-band QoS monitoring and reduce a bandwidth overhead with reduced implementation complexity of the system and improved communication efficiency.

H.264 in-band QoS monitoring is compatible with existing RTCP out-band monitoring, while reducing the RTCP report traffic with a lowered dependency upon the RTCP and improved efficiency of transmission over the multimedia network.

The use of the existing important data protection mechanism greatly enhances the reliability of a QoS report and the reliability of monitoring.

This report mechanism can report both the quality of H.264 video and the quality of other media such as audio, and thus can be applicable in various media communications.

To sum up, the in-band QoS monitoring according to the invention can improve the effect and efficiency of the existing report mechanism for the quality of transport over a video network, and thereby can improve the quality of transport over the video network and the performance of H.264 based multimedia communication products.

### Brief Description of the Drawings

Fig. 1 is a schematic diagram of a QoS report data packet format based upon the RTCP protocol;

Fig.2 is a schematic diagram of an SEI encapsulation format bearing a QoS report according to an embodiment of the invention; and

Fig.3 is a structure of RTCP RR report information in an H.264 SEI domain.

### Detailed Description of the Invention

The invention will be described in details hereinafter with reference to the drawings to make the objects, aspects and advantages thereof more apparent.

The RTCP bears a QoS report mechanism, and it is actually a universal reporting method which can be used to report both a QoS and other information. It may not be the most appropriate to report through the RTCP for a specific video communication application. If both a sender and a receiver of QoS information can communicate through a high level protocol such as H.264, then H.264 can be considered for bearing contents of a report. A basic idea of the invention lies in that an extension message of a data frame in the H.264 standard is used to bear QoS report information without the use of any extra channel, thereby implementing an "in-band" report mechanism.

Another basis to use the high level protocol of H.264 for transmission of the QoS report lies in that in current video communication applications, an adaptive measure for network transport is primarily implemented based upon a terminal instead of an intermediate network device such as a router, a switch or a gateway. Therefore, an extract from encapsulation of the QoS report is not dependent upon an underlying protocol, and QoS monitoring can be implemented provided that the terminal can understand an extract of H.264 borne QoS information without depending upon the underlying protocols such as the RTCP, etc.

Of course, the use of the H.264 "in-band" report mechanism does not mean exclusion of the application of the RTCP report mechanism. Both mechanisms can be used selectively or coexist, and the use of H.264 may even reduce the traffic of an RTCP report.

Further, if the H.264 "in-band" report approach is used, then various protection measures can be taken for an H.264 data packet. An H.264 data packet bearing a QoS report can be considered as important data for which a high strength protection measure can be taken in accordance with an Unequal Protection (UEP) principle, thereby guaranteeing proper arrival of the report data and improving the reliability of QoS monitoring.

Technical implementation details of embodiments of the invention will be set forth below to make the spirit and essence of the invention more apparent.

[The First Embodiment of the Invention]

Bearing of the QoS report based upon an H.264 extension message mechanism is substantially divided into the following three steps.

Firstly, respective multimedia communication terminals obtains QoS related data, e.g. values of the packet loss ratio, the delay and the jittering, and statistically generates QoS reports of H.264 multimedia communications. The reports may have the same or different contents as or from those of RTCP SR and RR reports, but describe consistent information on the quality of Service, a network condition, etc. related to H.264 media communications.

However, the terminal bears the QoS reports in H.264 extension messages and sends the messages to the other communication terminals. The H.264 extension message mechanism, typically the SEI and the like, has been mentioned previously, and this embodiment adopts an SEI message. Of course, other extension messages can also be used for bearing along with future H.264 extensions.

The terminals sending the QoS reports also receive the QoS reports sent from the other terminals. Indeed, each terminal will execute a QoS policy in accordance with the QoS reports.

[The Second Embodiment of the Invention]

When the SEI message is used to bear the QoS report, primary contents of RTCP SR and RR reports can be taken directly as payload of the H.264 SEI message, taking an existing RTCP QoS report as an example. Thus, an extended SEI message can be used to bear the information.

Firstly, information concerning the structure and syntax of the SEI message will be introduced below.

H.264 provides various message extension mechanisms among which the SEI is suitable for use with the invention. Supplement Enhancement Information (SEI) is defined in H.264, and its data representation regions are independent from video coded data. Its usage has been given in descriptions of the NAL in the H.264 protocol. A basic unit of an H.264 bitstream is an NALU which can bear various types of H.264 data, e.g., sequence parameters, picture parameters, slice data (i.e., specific image data) and SEI message data. The SEI is used to convey various messages and supports a message extension. Therefore, an SEI domain is used to convey a self-defined message for a specific purpose without any influence upon compatibility of an H.264 based video communication system. An NALU bearing an SEI message is referred to as an SEI NALU. An SEI NALU includes one or more SEI messages. Each SEI message includes some variables, primarily a payload Type and a payload Size, and these variables indicate the type and size of message payload. The syntaxes and semantic meanings of some common H.264 SEI messages are defined in H.264 Annex D.8 and D.9.

Payload included in an NALU is referred to as Raw-Byte Sequence Payload (RBSP), and the SEI is one of RBSP types. As defined in H.264 7.3, the syntax of SEI RBSP is as presented in Table 2.

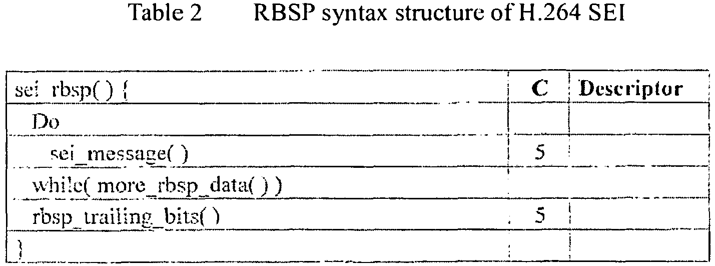

As can he seen, an SEI RBSP in an NALU can include a plurality of SEI messages, and a structure of an SEI message is as presented in Table 3.

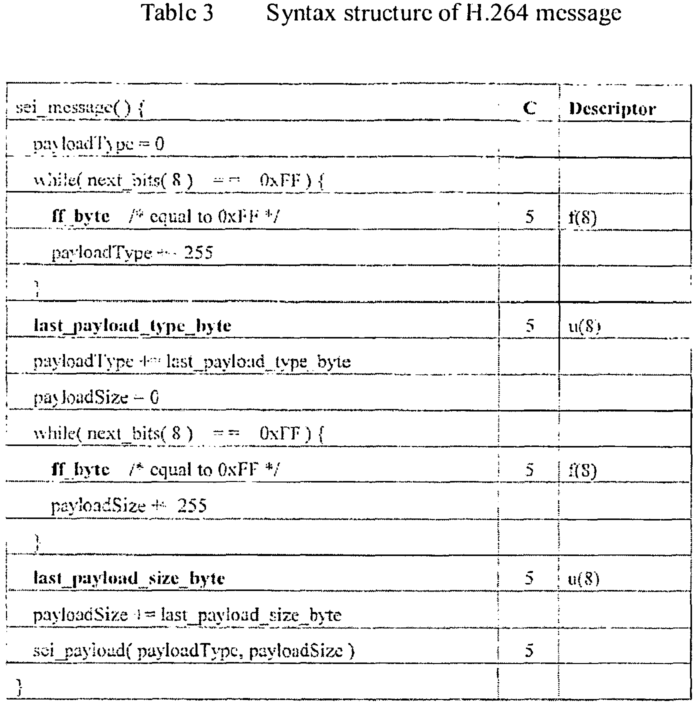

H.264 Annex D.8 defines a syntax message structure reserved for a future extended SEI message, as presented in Table 4.

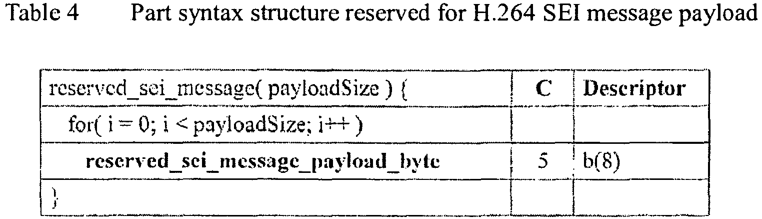

In descriptions of related embodiments of the invention, a data representation region of SEI is simply referred to as an SEI domain. Each SEI domain includes one or more SEI messages, and an SEI message is consisted of SEI head information and SEI valid payload. The SEI head information includes two fields, one of which indicates the type of payload in the SEI message and the other indicates the size of the payload. The payload type ranging from 0 and 255 is represented with a byte of 0x00 to 0xFE; the type ranging from 256 to 511 is represented with two bytes of 0xFF00 to 0xFFFE; and so on for the type above 511. Thus, a user can self-define an arbitrary number of payload types. The type 0 to type 18 have been defined in the standard as specific information, e.g., a buffer period of time, image timing. As can be seen, the SEI domain defined in H.264 can store sufficient user self-defined information as desired. An H.264 decoder that can not support parsing of the user self-defined information will discard the data in the SEI domain automatically. Therefore, useful self-defined information recorded in the SEI domain will not influence compatibility of an H.264 based video communication system.

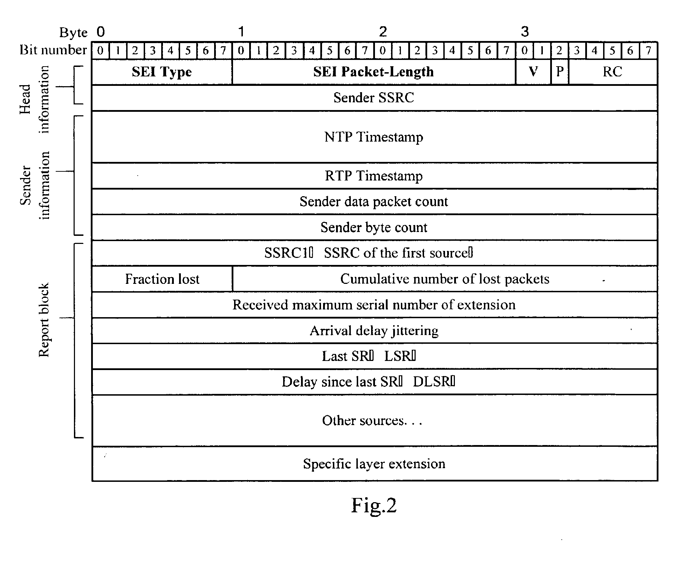

Based upon this idea, a specific SEI extension message is defined to be specially used to bear the QoS report in the second embodiment of the invention. It is prescribed in H.264 that SEI information is stored in a type of NALU, i.e., Type=6 as mentioned previously. The invention stores messages similar to the RTCP SR and RR reports in the SEI domain, so that the transmission efficiency can be guaranteed and a channel condition and decoding information can be fed back efficiently to facilitate interactive resistance against the data packet loss between a coding end and a decoding end. A specific structure is as illustrated in Fig.2 where the format of RTCP SR and RR reports is used for all contents of the QoS reports except that the head information is arranged in the SEI message structure.

Head information of the SEI message for bearing the QoS report includes the following fields.

The first byte (byte 0) is an SEI Type field which indicates that the payload is the corresponding QoS report. In this embodiment, SEI Type = 200 indicates what is stored in the SEI domain is similar to a sender report (SR) in the RTCP, and SEP Type = 201 indicates what is stored in the SEI domain is similar to a receiver report (RR).

The second and third bytes (bytes 1 and 2) are a payload length field (SEI Packet_length) which indicates a corresponding QoS report length which has the same definition as that for a length field in a QoS report of the RTCP.

The fourth and subsequent bytes are payload of the SEI message in which the corresponding QoS report is filled.

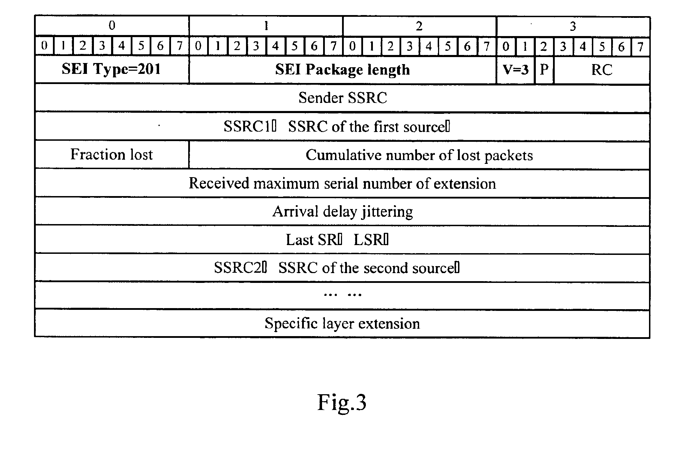

The QoS report is also categorized into a sender report and a receiver report which are distinguished by the payload type field, that is, by different values of SEI Type. Specific contents of the QoS report can be the same as that of the SR and RR reports of the RTCP, as illustrated in Fig.3.

The version information field (V) of 2 bits takes a binary value of 11, i.e., V=3, in this example, and indicates a difference from earlier versions.

The padding field (P) of 1 bit indicates whether padding contents are present and is the same as in the RTCP.

The reception report count field (RC) of 5 bits indicates the number of reception report blocks reported in the QoS report.

The sender SSRC field of 32 bits identifies a sender of the report on quality of service.

A sender report, which may include a sender information block, describes related information on the sender of the report.

A plurality of reception report blocks included subsequently describe statistic information on multimedia from different sources, and each block includes an identifier of a source and related statistic indexes of a multimedia stream. The meanings of the indexes have been described previously in connection with the RTCP.

A specific layer extension included at the end is used for a specific layer reserved function extension.

As can be seen, the QoS report contents as shown in Fig.3 are substantially the same as those for the RTCP. After the basic contents of the RR and SR of the RTCP are written into the SEI domain, the RTCP information can be transported without any dedicated logic channel, thereby saving a part of the bandwidth overhead. Actually, the essence of the invention lies in the use of the SEI message for in-band bearing. How to statistically generate the QoS report will not influence the scope of the invention provided that the inventive purpose of the QoS monitoring can be achieved.

After the QoS report is realized, various QoS polices can be carried out based on the report, for example, the RTCP field of cumulative lost data packets is used to feed back decoding information in bidirectional video communications (where a terminal is provided with both a coder and a decoder) to facilitate interactive resistance against the data packet loss.

Further, such fields as the arrival delay jittering field and sender byte count field present in the QoS report can be used to sense the network condition. Particularly, a rate control algorithm can further guarantee an approximately constant rate at the coding end in accordance with the information in the arrival delay jittering field, and an average rate of payload can be calculated from the sender byte count field so that the sender end can reset encoder parameters in accordance with the network condition, including adjusting a target frame rate, recovery of image quality and resolution of an original image, etc.

In order to improve the reliability of RTCP transmission, various protection measures can be taken for an H.264 data packet in addition to the use of the H.264 "in-band" report approach. The H.264 data packet bearing the QoS report can be considered as important data for which a high strength protection measure can be taken in accordance with the unequal protection principle, thereby guaranteeing proper arrival of the report data. For example, the SEI for bearing the QoS report shall be further borne in an NALU. As described previously, the NALU has head information in which an importance level of contents can be set, and therefore, a communication terminal can set the identifier (nal_ref_idc) field of the NALU, for example, as 1, 2, 3, in accordance with reliability requirement on transmission of the QoS report. Protection measures with different strengths can be taken in accordance with the level of this field in error resilience coding.

The communication terminal can also adjust dynamically a period to transmit the QoS report based upon the SEI message in accordance with a current network condition and a high-level application demand.

By default, an interval of time to write RTCP information into an SEI domain (i.e., a report period) is be consistent with the transmission interval proposed in the RTCP. Of course, it is possible that the report period may not necessarily be the same as prescribed in the RFC 3550 dependent upon need of a specific application (a specific protection method, etc.), and instead the report period can be adjusted. The report period is determined dependent upon the need of the specific application. For example, an important purpose of report data is to estimate dynamically the performance of a network, such as the packet loss ratio, the delay and the jittering. If it is required to detect the data frequently, the report period can be made short, otherwise the report period can be made longer. Reporting can be stopped in the case of a good network condition.

Further, the SEI message can be used to not only transmit the QoS report of the H.264 video but also bear the QoS report of hybrid media streams provided that reception report data blocks corresponding to the media streams are added at the end of the QoS report. For an audio stream, for example, it is sufficient that specific contents of a report block of the SSRC of its source are added in an SR report.

Those ordinarily skilled in the art would appreciate that in the above descriptions of the embodiments, examples have been presented for specific allocations and values of the fields, but the specific allocations can be rearranged and the values of the fields can take various values in a specific application as required and in light of the principle of the invention.

Although the invention has been illustrated and described with reference to the preferred embodiments of the invention, those ordinarily skilled in the art shall appreciate that various changes can be made to the invention in forms and details thereof without departing the scope of the invention.

## Claims

1. A method for monitoring quality of service in multimedia communications, comprising:
obtaining, by a communication terminal, data related to quality of service of the multimedia communications;
statistically generating from the data, by the communication terminal, a report on quality of service of the multimedia communications;
bearing, by the communication terminal, the report on quality of service, QoS, in an extension message of a data frame in a multimedia compression codec standard used for the multimedia communications; and
sending, by the communication terminal, the extension message to other communication terminals which also send QoS reports to the communication terminal.

2. The method for monitoring the quality of service of multimedia communications according to claim 1, wherein the multimedia compression codec standard is H.264 standard.

3. The method for monitoring the quality of service of multimedia communications according to claim 1 or 2, wherein:
the extension message comprises supplement enhancement information, and the report on quality of service is borne in the supplement enhancement information of the extension message; and
the supplement enhancement information is borne in a network abstract layer unit of the data frame in the standard.

4. The method for monitoring the quality of service of multimedia communications according to claim 3, wherein the supplement enhancement information comprises:
a payload type field configured to indicate that payload is a corresponding report on quality of service;
a payload length field configured to indicate the length of the corresponding report on quality of service; and
the payload configured to be filled with the corresponding report on quality of service.

5. The method for monitoring the quality of service of multimedia communications according to claim 4, wherein the report on quality of service comprises a sender report or a receiver report which are distinguished by the payload type field.

6. The method for monitoring the quality of service of multimedia communications according to claim 3, wherein the supplement enhancement information is further borne by the network abstract layer unit; and
a network abstract layer reference identifier of the network abstract layer unit is set in accordance with a reliability requirement on transmission of the report on quality of service and takes corresponding protection measures in accordance with the identifier.

7. The method for monitoring the quality of service of multimedia communications according to claim 3, wherein when the report on quality of service of at least one media stream is borne in the supplement enhance message, the report on quality of service comprises a reception report block corresponding to the borne at least one media stream.

8. The method for monitoring quality of service in multimedia communications according to claim 1, further comprising:
extracting the report on quality of service from the received extension message of the data frame in the standard; and
carrying out the quality of service policy in accordance with the report on quality of service by each of the communication terminals.

9. A system for monitoring quality of service in multimedia communications, the system comprising:
means for obtaining data related to quality of service of the multimedia communications;
means for statistically generating from the data a report on quality of service of the multimedia communications;
means for bearing the report on quality of service, QoS, in an extension message of a data frame in a multimedia compression codec standard used for the multimedia communications; and
means for sending the extension message to communication terminals which also obtain QoS related data from the communication terminals.

10. The system for monitoring quality of service in multimedia communications according to claim 10, further comprising:
means for extracting the report on quality of service from the received extension message of the data frame in the standard; and
mean for carrying out the quality of service policy in accordance with the report on quality of service by each of the communication terminals.

## Patentansprüche

1. Verfahren zum Überwachen der Dienstqualität in Multimedia-Kommunikationen, umfassend:
Erhalten, durch ein Kommunikationsendgerät, von Daten bezüglich der Dienstqualität der Multimedia-Kommunikationen;
statistisches Erzeugen aus den Daten, durch das Kommunikationsendgerät, eines Berichts über die Dienstqualität der Multimedia-Kommunikationen;
Tragen, durch das Kommunikationsendgerät, des Berichts über die Dienstqualität, QoS, in einer Erweiterungsnachricht eines Datenrahmens in einem für die Multimedia-Kommunikationen verwendeten Multimedia-Kompressions-Codierer/Decodierer-Standard; und
Senden, durch das Kommunikationsendgerät, der Erweiterungsnachricht an andere Kommunikationsendgeräte, die auch QoS-Berichte an das Kommunikationsendgerät senden.

2. Verfahren zum Überwachen der Dienstqualität von Multimedia-Kommunikationen nach Anspruch 1, wobei der Multimedia-Kompressions-Codierer/Decodierer-Standard der Standard H.264 ist.

3. Verfahren zum Überwachen der Dienstqualität von Multimedia-Kommunikationen nach Anspruch 1 oder 2, wobei:
die Erweiterungsnachricht zusätzliche Verbesserungsinformationen umfasst und der Bericht über die Dienstqualität in den zusätzlichen Verbesserungsinformationen der Erweiterungsnachricht getragen wird; und
die zusätzlichen Verbesserungsinformationen in einer Netzwerkabstraktschichteinheit des Datenrahmens in dem Standard getragen wird.

4. Verfahren zum Überwachen der Dienstqualität von Multimedia-Kommunikationen nach Anspruch 3, wobei die zusätzlichen Verbesserungsinformationen Folgendes umfassen:
ein Nutzlasttypfeld, das dazu konfiguriert ist, anzuzeigen, dass Nutzlast ein korrespondierender Bericht über die Dienstqualität ist;
ein Nutzlastlängenfeld, das dazu konfiguriert ist, die Länge des korrespondierenden Berichts über die Dienstqualität anzuzeigen; und
wobei die Nutzlast dazu konfiguriert ist, mit dem korrespondierenden Bericht über die Dienstqualität gefüllt zu werden.

5. Verfahren zum Überwachen der Dienstqualität von Multimedia-Kommunikationen nach Anspruch 4, wobei der Bericht über die Dienstqualität einen Senderbericht oder einen Empfängerbericht umfasst, die sich durch das Nutzlasttypfeld unterscheiden.

6. Verfahren zum Überwachen der Dienstqualität von Multimedia-Kommunikationen nach Anspruch 3, wobei die zusätzlichen Verbesserungsinformationen weiter von der Netzwerkabstraktschichteinheit getragen werden; und
eine Netzwerkabstraktschicht-Bezugsidentifizierung der Netzwerkabstraktschichteinheit in Übereinstimmung mit einer Zuverlässigkeitsanforderung bei Übertragung des Berichts über die Dienstqualität gesetzt wird und korrespondierende Schutzmaßnahmen in Übereinstimmung mit der Identifizierung vornimmt.

7. Verfahren zum Überwachen der Dienstqualität von Multimedia-Kommunikationen nach Anspruch 3, wobei, wenn der Bericht über die Dienstqualität mindestens eines Medienstroms in der zusätzlichen Verbesserungsnachricht getragen wird, der Bericht über die Dienstqualität einen Empfangsberichtblock korrespondierend mit dem getragenen mindestens einen Medienstrom umfasst.

8. Verfahren zum Überwachen der Dienstqualität in Multimedia-Kommunikationen nach Anspruch 1, weiter umfassend:
Extrahieren des Berichts über die Dienstqualität aus der empfangenen Erweiterungsnachricht des Datenrahmens in dem Standard; und
Ausführen der Dienstqualität-Verfahrensweise in Übereinstimmung mit dem Bericht über die Dienstqualität durch jede der Kommunikationsendgeräte.

9. System zum Überwachen der Dienstqualität in Multimedia-Kommunikationen, wobei das System Folgendes umfasst:
Mittel zum Erhalten von Daten bezüglich der Dienstqualität der Multimedia-Kommunikationen;
Mittel zum statistischen Erzeugen, aus den Daten, eines Berichts über die Dienstqualität der Multimedia-Kommunikationen;
Mittel zum Tragen des Berichts über die Dienstqualität, QoS, in einer Erweiterungsnachricht eines Datenrahmens in einem für die Multimedia-Kommunikationen verwendeten Multimedia-Kompressions-Codierer/Decodierer-Standard; und
Mittel zum Senden der Erweiterungsnachricht an Kommunikationsendgeräte, die auch QoS-bezogene Daten von den Kommunikationsendgeräten erhalten.

10. System zum Überwachen der Dienstqualität in Multimedia-Kommunikationen nach Anspruch 10, weiter umfassend:
Mittel zum Extrahieren des Berichts über die Dienstqualität aus der empfangenen Erweiterungsnachricht des Datenrahmens in dem Standard; und
Mittel zum Ausführen der Dienstqualität-Verfahrensweise in Übereinstimmung mit dem Bericht über die Dienstqualität durch jedes der Kommunikationsendgeräte.

## Revendications

1. Procédé permettant de contrôler une qualité de service dans des communications multimédia, comprenant les étapes suivantes :
obtenir, par un terminal de communication, des données relatives à la qualité de service des communications multimédia ;
générer statistiquement à partir des données, par le terminal de communication, un rapport sur la qualité de service des communications multimédia ;
inclure, par le terminal de communication, le rapport sur la qualité de service, QoS, dans un message d'extension d'une trame de données dans une norme codec de compression multimédia utilisée pour les communications multimédia ; et
envoyer, par le terminal de communication, le message d'extension à d'autres terminaux de communication qui envoient également des rapports QoS au terminal de communication.

2. Procédé permettant de contrôler la qualité de service de communications multimédia selon la revendication 1, dans lequel la norme codec de compression multimédia est la norme H.264.

3. Procédé permettant de contrôler la qualité de service de communications multimédia selon la revendication 1 ou 2, dans lequel :
le message d'extension comprend des informations d'amélioration supplémentaires, et le rapport sur la qualité de service est inclus dans les informations d'amélioration supplémentaires du message d'extension ; et
les informations d'amélioration supplémentaires sont incluses dans une unité de couche d'abstraction réseau de la trame de données dans la norme.

4. Procédé permettant de contrôler la qualité de service de communications multimédia selon la revendication 3, dans lequel les informations d'amélioration supplémentaires comprennent :
un champ de type de données utiles configuré pour indiquer que les données utiles sont un rapport correspondant sur la qualité de service ;
un champ longueur de données utiles configuré pour indiquer la longueur du rapport correspondant sur la qualité de service ; et
les données utiles configurées pour être remplies avec le rapport correspondant sur la qualité de service.

5. Procédé permettant de contrôler la qualité de service de communications multimédia selon la revendication 4, dans lequel le rapport sur la qualité de service comprend un rapport émetteur ou un rapport récepteur qui sont distingués par le champ de type de données utiles.

6. Procédé permettant de contrôler la qualité de service de communications multimédia selon la revendication 3, dans lequel les informations d'amélioration supplémentaires sont en outre transportées par l'unité de couche d'abstraction réseau ; et
un identifiant de référence de couche d'abstraction réseau de l'unité de couche d'abstraction réseau est fixé selon une exigence de fiabilité concernant la transmission du rapport sur la qualité de service et prend des mesures de protection correspondantes selon l'identifiant.

7. Procédé permettant de contrôler la qualité de service de communications multimédia selon la revendication 3, dans lequel lorsque le rapport sur la qualité de service d'au moins un flux multimédia est inclus dans le message d'amélioration supplémentaire, le rapport sur la qualité de service comprend un bloc de rapport de réception correspondant audit flux multimédia transporté.

8. Procédé permettant de contrôler une qualité de service dans des communications multimédia selon la revendication 1, comprenant en outre les étapes suivantes :
extraire le rapport sur la qualité de service à partir du message d'extension reçu de la trame de données, dans la norme ; et
mettre en oeuvre la politique de qualité de service selon le rapport sur la qualité de service par chacun des terminaux de communication.

9. Système permettant de contrôler une qualité de service dans des communications multimédia, le système comprenant :
des moyens destinés à obtenir des données relatives à la qualité de service des communications multimédia ;
des moyens destinés à générer statistiquement à partir des données un rapport sur la qualité de service des communications multimédia ;
des moyens destinés à inclure le rapport sur la qualité de service, QoS, dans un message d'extension d'une trame de données dans une norme codec de compression multimédia utilisée pour les communications multimédia ; et
des moyens destinés à envoyer le message d'extension aux terminaux de communication qui obtiennent également des données relatives à la QoS à partir des terminaux de communication.

10. Système permettant de contrôler une qualité de service dans des communications multimédia selon la revendication 10, comprenant en outre :
des moyens destinés à extraire le rapport sur la qualité de service à partir du message d'extension reçu de la trame de données, dans la norme ; et
des moyens destinés à mettre en oeuvre la politique de qualité de service selon le rapport sur la qualité de service par chacun des terminaux de communication.
